# EUROPEAN PATENT SPECIFICATION

(11) **EP 3 229 057 B1**
(45) Date of publication and mention of the grant of the patent: **27.11.2019**
(21) Application number: 17163800.0
(22) Date of filing: 30.03.2017
(51) Int. Cl.: G02B 27/00, B60R 1/00, G02B 1/18

(54) **IMAGE CAPTURING SYSTEM**
BILDAUFNAHMESYSTEM
SYSTÈME DE CAPTURE D'IMAGES

(30) Priority: 01.04.2016 TW 105110685
(43) Date of publication of application: 11.10.2017
(73) Proprietor: H.P.B Optoelectronic Co., Ltd., Taichung City 428 (TW)
(72) Inventor: Hsu, Hsuan-Yueh, 428 Taichung City (TW); Lin, Ming-Chang, 428 Taichung City (TW)
(74) Representative: Gee, Steven William

(56) References cited:
- EP-A2- 1 145 905
- JP-A- H10 250 532
- JP-A- 2000 035 486

## Description

### BACKGROUND OF THE INVENTION

### 1. Field of the Invention

The present invention relates to an image capturing system, more particularly to an image capturing system adapted to prolong the effect of a hydrophilic optical film, wherein when ultraviolet light beams from an external ultraviolet light source are radiated onto the hydrophilic optical film on an optical lens unit in the image capturing system, the effect of the hydrophilic optical film is prolonged and enhanced.

### 2. The Prior Arts

Due to the advance of the electronic technologies, optical coating techniques are widely employed in several fields. Most of the presently existing optical coating techniques use optical base materials in order to form some specific optical films so as to effectively enhance the transmittance and reflectivity of the optical base materials, and can even adjust the corresponding transmittance and reflectivity of particular wavelengths. To permit light transmittance, most of the optical coatings apply non-metal materials for fabrication of the optical coated films such that the latter suffers not only energy loss but also causes the external surface tension of the optical base materials, especially upon encountering water, to turn a portion of the water into water droplets and water marks, hence the optical base materials fail to provide expected transmittance effectively.

Of late, the applicant has taken part in research concerning "hydrophilic optical film structure" disclosed in Taiwan Patent Application No. 104137970, wherein the hydrophilic optical film structure is adapted for optical material, and includes a light transmittance film formed on the optical base material, a hydrophilic optical film formed on the light transmittance film, and has molar concentration ratio of TiO₂ (titanium dioxide) and SiO₂ (silicon dioxide) from 1:0.1 to 1:2 and upon fixing and upon being radiated by ultraviolet beams, provides a water contact angle of less than 10 degrees, thereby enhancing the hydrophilicity and light transmittance of the optical base material to 91%∼98%.

Even though the optical lens unit coated with the hydrophilic optical film reduces the water contact angle upon being radiated by ultraviolet light beam from the sun so as to provide enhancement of the hydrophilicity, the hydrophilicity of the hydrophilic optical film is restricted by the problem of time validity such that the ultraviolet light beam is required to maintain the hydrophilicity and self-cleaning function. Since the sunshine of the daytime is limited, especially when it is dark at night time, the hydrophilic optical film cannot conduct the hydrophilicity and self-cleaning function effectively. In case the optical lens unit is utilized in a transportation system, there may occur the malfunction of the hydrophilicity and self-cleaning function such that rain drops may adhere on the optical lens unit during rainy days, thereby causing hazardous phenomenon to the driving performance. Therefore, how to radiate the ultraviolet light beam effectively onto the hydrophilic optical film so as to maintain the hydrophilicity and self-cleaning function of the hydrophilic optical film throughout the whole day and to achieve and enhance the hydrophilic optical film with respect to the ambient surroundings and providing clear visibility of traffic to the driving person become urgent problems that need to be solved for those manufacturers of the image capturing system and the corresponding researchers relating thereto.

### SUMMARY OF THE INVENTION

A primary objective of the present invention is to provide an image capturing system in which a hydrophilic optical film in real application can provide the hydrophilicity and conduct self-cleaning function during the validity time.

Another objective of the present invention is to provide an image capturing system adapted for a hydrophilic optical film. Especially, the present invention relates to an image capturing system in which a hardware of at least one ultraviolet light source is designed at an ambient surrounding of the optical lens unit. When the ultraviolet light source is manually or automatically activated, the ultraviolet light beam from the ultraviolet light source is radiated onto the hydrophilic optical film disposed on the optical lens unit such that the hydrophilicity and self-cleaning function of the hydrophilic optical film are enhanced, thereby allowing the hydrophilic optical film to provide resistance against an ambient surrounding of the hydrophilic optical film and clear visibility of traffic to the driving person.

According to the invention there is provided an image capturing system including: an optical lens unit with a lens; at least one radiating module; and a brightness detection unit; wherein the image capturing system includes a hydrophilic optical film, wherein the radiating module is used for radiating a light beam, wherein the radiating module is disposed at an appropriate position surrounding an environment of the optical lens unit and cooperating with the optical lens unit to define an intersection angle. The light beam from the radiating module is radiated onto the hydrophilic optical film in order to prolong the effect of the hydrophilic optical film while the brightness detection unit upon detecting an external brightness activates the radiating module. The light beam radiated from the radiating module has a wavelength ranging from 360-400 nanometers. Each of the at least one radiating module and the optical lens unit has a normal line crossing each other to define a crossing point and the intersection angle is defined at the crossing point between the two normal lines of the radiating module and the optical lens unit. The hydrophilic optical film is disposed on an outer surface of the lens of the optical lens unit. A straight line passing through the center point of the radiating module (2) is parallel to another straight line passing through the center point of the optical lens unit (1) and the straight lines are spaced apart by a distance (D) of at least 0.1 mm.

Preferably, the image capturing system of the present invention is further characterized by a base seat having an end face indented to form a recess, in which the optical lens unit and the radiating module are seated.

In one embodiment of the present invention, two pieces of the radiating modules are seated around appropriate positons surrounding the environment of the optical lens unit.

Preferably, each of the radiating modules is an LED (Light Emitting Diode) adapted to emit ultraviolet light beams.

Preferably, the maximum intersection angle is 75 degrees.

Preferably, the radiating module is activated or de-activated manually or automatically, or a combination of both.

Preferably, the image capturing system of the present invention further includes a rain drop detection unit, which activates the radiating module automatically upon detection of rain drops.

The image capturing system of the present invention further includes a control device that permits manual activation or deactivation of the radiating module.

Due to the specific design, in which a hardware of at least one ultraviolet light source is installed at an ambient surrounding of the optical lens unit, and when the ultraviolet light source is manually or automatically activated, the ultraviolet light beam from the ultraviolet light source is radiated onto the hydrophilic optical film disposed on the optical lens unit such that the hydrophilicity and self-cleaning function of the hydrophilic optical film are enhanced, thereby allowing the hydrophilic optical film to provide resistance against an ambient surrounding of the hydrophilic optical film and clear visibility of traffic to the driving person. In addition, when ultraviolet light beams from an external ultraviolet light source are radiated onto the hydrophilic optical film on an optical lens unit in the image capturing system, the effect of the hydrophilic optical film is prolonged and self-cleaning function is enhanced. Therefore, the optical lens unit provided with the hydrophilic optical film of the present invention is suitable for the night time, which lacks the ultraviolet light beam from the sun. In other words, the image capturing system of the present invention can be applied for the whole day usage. Moreover, each of two radiating modules and the optical lens unit has a normal line crossing each other to define a crossing point and the intersection angle defined at the crossing point between two normal lines of each radiating module and the optical lens unit is less than 75 degrees, while the normal lines of the radiating modules are located in front of the center point of the optical lens unit, the ultraviolet light beams emitted from the ultraviolet light emitting modules are outside the field of view of the optical lens unit and thus can be radiated entirely onto the hydrophilic optical film such that the hydrophilicity effect is prolonged and enhanced. Finally, the image capturing system provided with the hydrophilic optical film can be utilized in a transportation system, the hydrophilicity and self-cleaning function of the hydrophilic optical film can be maintained throughout the whole day to achieve and enhance the hydrophilic optical film with respect to the ambient surroundings and providing clear visibility of traffic to the driving people.

### BRIEF DESCRIPTION OF THE DRAWINGS

The present invention will be apparent to those skilled in the art by reading the following detailed description of a preferred embodiment thereof, with reference to the attached drawings, in which:
Fig. 1 is a perspective view illustrating an image capturing system of the present invention adapted for prolonging the effect of a hydrophilic optical film;
Fig. 2 is a lateral side view of the image capturing system of the present invention shown in Fig. 1; and
Fig. 3 is an exploded view of the image capturing system of the present invention adapted for prolonging the effect of the hydrophilic optical film.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

First of all, a basic concept of a hydrophilic optical film is presented. The hydrophilic optical film is fabricated from photocatalyzer, like TiO₂ (titanium dioxide) and SiO₂ (silicon dioxide), which is one type of semiconductor material, in order to achieve the super hydrophilicity effect. The photocatalyzer is one kind of catalyst, when sun light or ultraviolet light beams are radiated, the electrons on the external surface of the catalyst are irritated, generating sufficient power to separate in form of electron drift, causing positively charged holes flow, which action permits separation of hydroxides from bound water molecules and thus forming relatively active hydroxy radical, when combining with organic substance, will attract the electron so as to break the bonding structure of the organic substance. Because the hydrophilic optical film is capable of odor removing, sterilization, anti-sweat, and self-cleaning functions, in addition to generating electron hole from the hydrophilic optical film upon being radiated by ultraviolet light beams and causing TiO₂ lacking O₂, such that said place is hydrophilic and water droplets can easily adhere thereon. Generally, one water droplet on a flat plane forms a dewdrop and the external surface of the water droplet and the flat plane cooperatively define a contact angle, wherein the dimension of the contact angle relates to the hydrophilicity of the flat plane, the greater the hydrophilicity the smaller the contact angle becomes, similar to a membrane. If the contact angle is great, the optical film is non-hydrophilic.

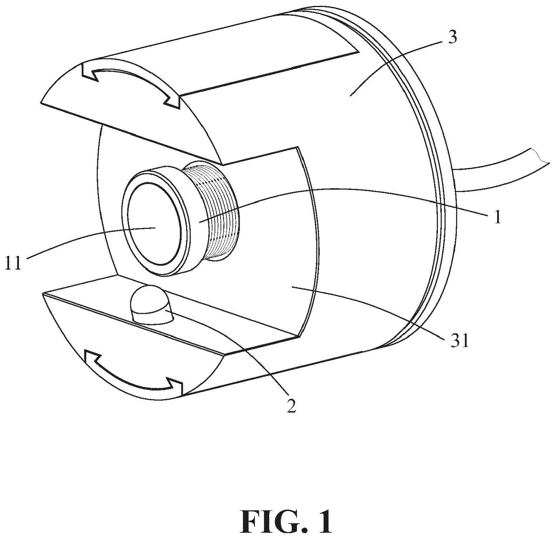

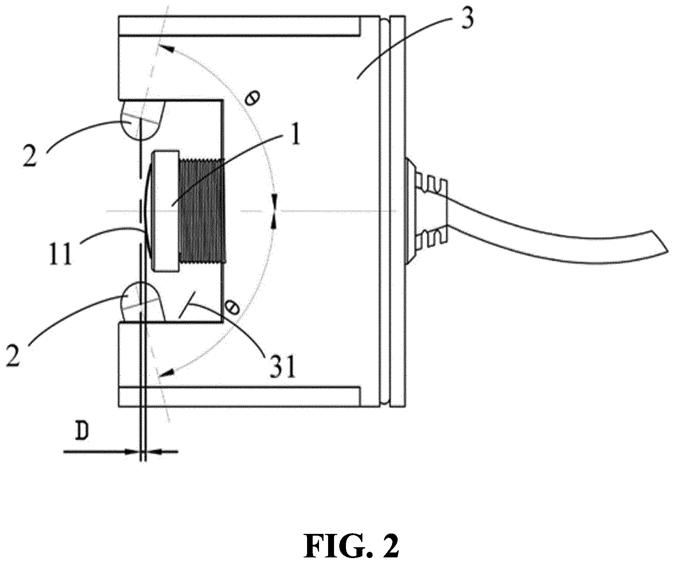

Referring to Figs. 1 and 2, wherein, Fig. 1 is a perspective view illustrating an image capturing system of the present invention adapted for prolonging the effect of a hydrophilic optical film; and Fig. 2 is a lateral side view of the image capturing system of the present invention shown in Fig. 1. As shown, an image capturing system of the present invention for a hydrophilic optical film includes: an optical lens unit 1; at least one radiating module 2; and a brightness detection unit 4, wherein the hydrophilic optical film 11 is disposed on an outer surface of the optical lens unit 1 while the radiating module 2 is used for radiating a light beam, characterized in that the radiating module 2 is disposed at an appropriate positon surrounding an environment of the optical lens unit 1 and cooperating with the optical lens unit 1 to define an intersection angle (θ), the light beam from the radiating module 2 is radiated onto the hydrophilic optical film 11 in order to prolong the effect of the hydrophilic optical film 11 while the brightness detection unit 4 upon detecting an external brightness activates the radiating module 2 automatically. The light beam radiated from the radiating module 2 has a wavelength ranging from 360-400 nanometers.

In addition, the image capturing system of the present invention further includes a base seat 3 having an end face indented to form a recess 31, in which the optical lens unit 1 and the radiating module 2 are seated. In one embodiment of the present invention, the image capturing system is utilized in a carrier vehicle, including AVMS (around view monitor system), such that the base seat 3 can be disposed at a suitable position exterior of the vehicle so that the optical lens unit 1 can capture the images around the ambient environment of the vehicle. Preferably, the base seat 3 is fabricated from plastic materials or non-metal materials and one optical lens unit 1 and one radiating module 2 are seated on the bottom surface of the recess 31 while a power source and other electronic components can be installed within an interior of the base seat 3 for supplying electrical power to the lens unit 1 and the radiating module 2. Preferably, in one embodiment, two radiating modules 2 are installed around the lens unit 1, at upper and lower portions of the lens unit 1 in order to radiate the light beams effectively onto the hydrophilic optical film 11 on the lens unit 1. Note that the number of radiating modules 2 should not be limited only to the disclosed ones. The number of radiating modules 2 can be varied according to the required radiating scope of the hydrophilic optical film 11.

Preferably, two LEDs (Light Emitting Diode) adapted to radiate ultraviolet light beams with wavelengths ranging from 360-400 nanometers serve the purpose of two radiating modules 2. A wavelength of 385 nanometers is utilized herein. In one embodiment, each of the radiating modules 2 and the optical lens unit 1 has a normal line which cross each other to define a crossing point. An intersection angle (θ) is defined at the crossing point between the two normal lines of a radiating module 2 and the optical lens unit 1. The maximum intersection angle (θ) is 75 degrees. Moreover, a straight line passing through the center point of the radiating module 2 is parallel to another straight line passing through the center point of the optical lens unit 1 and these straight lines are spaced apart by a distance (D) of at least 0.1 mm. In one embodiment, the optical lens unit 1 has a vertical angle of 140 degrees and a horizontal angle of 160 degrees. Each of the UV LEDs 2 is capable of emitting ultraviolet light beam with wavelength of 385 nanometers. Since the center point of each UV LED 2 is spaced apart from the center point of the optical lens unit 1 by at least 0.1 mm, the UV light beams radiating from the UV LED 2 are outside the field of view of the optical lens unit 1 such that the UV light beams can be radiated entirely onto the hydrophilic optical film 11, thereby adjusting and prolonging the hydrophilicity of the hydrophilic optical film 11. Note that the stated distance (D) and the stated intersection angle (θ) between the optical lens unit 1 and the radiating module 2 are examples, and can be varied without affecting the field of view (FOV) of the optical lens unit 1. Different optical lens units 1 may provide different vertical and horizontal angles that may directly affect the distance (D) and the intersection angle (θ) between the optical lens unit 1 and the radiating module 2.

In addition, the brightness detection unit 4 upon detecting the external brightness activates the radiating module 2 automatically such that upon detecting that the external brightness is below a preset threshold value, the UV LEDs of the radiating modules 2 are activated automatically such that the UV light beams radiated from the UV LEDs are radiated entirely onto the hydrophilic optical film 11, thereby prolonging the hydrophilicity effect of the hydrophilic optical film 11.

The image capturing system of the present invention further includes a rain drop detection unit 5, which activates the radiating module 2 automatically upon detection of rain drops. The rain drop detection unit is capable of automatically activating the UV LEDs upon detection of rain drops or water drops such that the LEDs can emit UV light beams onto the hydrophilic optical film 11 so as to prolong the hydrophilicity effect in order to resist the awful environment of rainy days.

The image capturing system of the present invention further includes a control device 6 that permits manually activation or deactivation of the radiating module 2. In the event that the image capturing system of the present invention is utilized in a carrier vehicle, the control device 6 can be disposed within an interior of the vehicle such that upon activation of the vehicle, the driver can simultaneously manipulate the control device 6, thereby activating the radiating module 2. A timer (not visible) is provided and is set up to de-activate the radiating module 2 automatically after the elapse of 30 minutes.

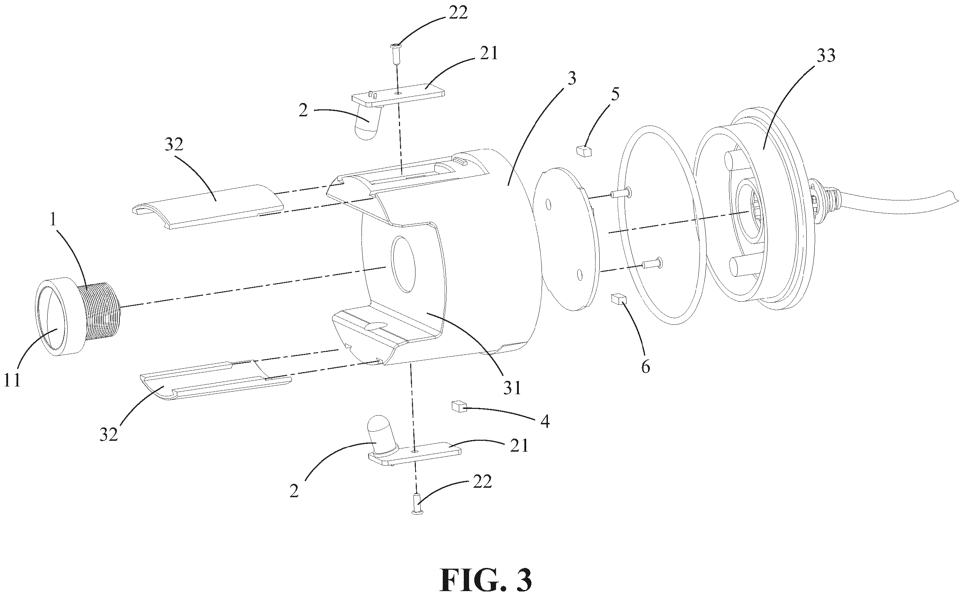

In the event a carrier vehicle is required to be installed with AVMS (around view monitor system), the user can choose and apply the image capturing system of the present invention for capturing the images. Referring to Fig. 3, first of all, a base seat 3 is prepared to have one end portion indented to form a recess 31 while the required electronic components can be disposed within an interior space of the base seat 3, wherein the base seat 3 is preferably fabricated from plastic materials or non-metal materials. The optical lens unit 1 is installed within a center of the recess 31 for establishing electric connection with the electronic components in the interior space of the base seat 3 in such a manner that the optical lens unit 1 has a vertical angle of 140 degrees and a horizontal angle of 160 degrees. A hydrophilic optical film 11 is disposed on the external surface of the lens of the optical lens unit 1 and two UV LEDs of the radiating modules 2 are coupled electrically with the printed circuit board 21 and are further fastened via fastener screws 22 to the upper and lower portions of the recess 31. Two shielding plates 32 are mounted on the base seat 3 so as to conceal the UV LEDs, which emit UV light beam with wavelength of 385 nanometers. The straight line passing through the center point of each UV LED 2 is spaced apart from another straight line passing the center point of the optical lens unit 1 by at least 0.1 mm while the radiating module 2 and the optical lens unit 1 has a normal line crossing each other to define a crossing point. The intersection angle (θ) is defined at the crossing point between the two normal lines of the radiating module 2 and the optical lens unit 1. Finally, a rear shielding plate 33 is attached to an opposing end portion of the base seat 3 and the whole assembly is supplied by the power source. When the image capturing system is mounted on the AVMS, the optical lens unit 1 begins to capture the images effectively around the hydrophilic optical film 11 upon activation of the light radiating modules 2 due to prolonging hydrophilicity effect of the hydrophilic optical film 11 when the latter is radiated by the UV light beams from the UV LEDs of the radiating modules 2. In other words, the hydrophilicity and self-cleaning function of the hydrophilic optical film 11 are enhanced, thereby allowing the hydrophilic optical film to provide resistance against an ambient surrounding of the hydrophilic optical film 11 and clear visibility of traffic to the driving person.

Compared with the existing image capturing techniques with the image capturing system of the present invention, the present invention provides the following advantages:
1. Due to a hardware design with at least one ultraviolet light source installed at an ambient surrounding of the optical lens unit, when the ultraviolet light source is manually or automatically activated, the ultraviolet light beam from the ultraviolet light source is radiated onto the hydrophilic optical film disposed on the optical lens unit such that the hydrophilicity and self-cleaning function of the hydrophilic optical film are enhanced, thereby allowing the hydrophilic optical film to provide resistance against an ambient surrounding of the hydrophilic optical film and clear visibility of traffic to the driving person.
2. In addition, when ultraviolet light beams from an external ultraviolet light source are radiated onto the hydrophilic optical film on an optical lens unit in the image capturing system, the effect of the hydrophilic optical film is prolonged and the self-cleaning function is enhanced. Therefore, the optical lens unit provided with the hydrophilic optical film of the present invention is suitable for the whole day including night time, which lacks the ultraviolet light beam from the sun.
3. Owing to each of the radiating module 2 and the optical lens unit 1 having a normal line crossing each other to define a crossing point, an intersection angle (θ) is defined at the crossing point between the two normal lines of the radiating module 2 and the optical lens unit 1. The maximum intersection angle (θ) is 75 degrees. Since the center of the radiating module is outside the field of view of the optical lens unit, ultraviolet light beams emitted from the ultraviolet light emitting modules can be radiated entirely onto the hydrophilic optical film such that the hydrophilicity effect is prolonged and enhanced.
4. When the image capturing system of the present invention is applied in AVMS (around view monitor system) for capturing the images, due to the hydrophilicity and self-cleaning function of the hydrophilic optical film throughout the whole day, clear visibility of traffic will be provided for the driving person, hence safe driving advantages.

Although the present invention has been described with reference to the preferred embodiments thereof, it is apparent to those skilled in the art that a variety of modifications and changes may be made without departing from the scope of the present invention which is defined by the appended claims.

## Claims

1. An image capturing system including:
an optical lens unit (1) with a lens;
at least one radiating module (2); and
a brightness detection unit (4),
wherein the image capturing system includes a hydrophilic optical film (11), wherein the radiating module (2) is used for radiating a light beam, wherein the radiating module (2) is disposed at an appropriate position surrounding an environment of the optical lens unit (1) and cooperating with the optical lens unit to define an intersection angle (θ), the light beam from the radiating module (2) is radiated onto the hydrophilic optical film (11) in order to prolong the effect of the hydrophilic optical film (11) while the brightness detection unit (4) upon detecting an external brightness activates the radiating module (2), the light beam radiated from the radiating module (2) having a wavelength ranging from 360-400 nanometers,
charactiserised in that each of the at least one radiating module (2) and the optical lens unit (1) has a normal line crossing each other to define a crossing point and the intersection angle (θ) is defined at the crossing point between the two normal lines of the radiating module (2) and the optical lens unit (1),
in that the hydrophilic optical film (11) is disposed on an outer surface of the lens of the optical lens unit (1);
and in that a straight line passing through the center point of the radiating module (2) is parallel to another straight line passing through the center point of the optical lens unit (1) and the straight lines are spaced apart by a distance (D) of at least 0.1 mm.

2. The image capturing system according to claim 1, further comprising a base seat (3) having an end face indented to form a recess (31), in which the optical lens unit (1) and the radiating module (2) are seated.

3. The image capturing system according to claim 1, wherein two radiating modules (2) are seated at positions surrounding the environment of the optical lens unit (1).

4. The image capturing system according to claim 3, wherein each of the radiating modules (2) is an LED (Light Emitting Diode) adapted to emit ultraviolet light beams.

5. The image capturing system according to claim 1, wherein the maximum intersection angle is 75 degrees.

6. The image capturing system according to claim 1, wherein the radiating module is activated or de-activated manually or automatically, or a combination of both.

7. The image capturing system according to claim 6, further comprising a rain drop detection unit (5), which activates the radiating module (2) automatically upon detection of rain drops.

8. The image capturing system according to claim 6, further comprising a control device (6) that permits manually activation or deactivation of the radiating module (2).

## Patentansprüche

1. Ein Bilderfassungssystem mit:
eine optische Linseneinheit (1) mit einer Linse;
mindestens ein Strahlungsmodul (2): und
eine Helligkeitserfassungseinheit (4),
wobei das Bilderfassungssystem einen hydrophilen optischen Film (11) beinhaltet, wobei das Strahlungsmodul (2) zum Abstrahlen eines Lichtstrahls verwendet wird, wobei das Strahlungsmodul (2) an einer geeigneten Position um eine Umgebung der optischen Linseneinheit (1) angeordnet ist und mit der optischen Linseneinheit zusammenwirkt, um einen Schnittwinkel (θ) zu definieren, wobei der Lichtstrahl des Strahlungsmoduls (2) auf den hydrophilen optischen Film (11) gestrahlt wird, um die Wirkung des hydrophilen optischen Films (11) zu verlängern, während die Helligkeitserfassungseinheit (4) beim Erfassen einer äußeren Helligkeit das Strahlungsmodul (2) aktiviert, wobei der vom Strahlungsmodul (2) ausgestrahlte Lichtstrahl eine Wellenlänge im Bereich von 360-400 Nanometern aufweist,
**dadurch gekennzeichnet, dass** jedes der mindestens einen Strahlungsmodule (2) und die optische Linseneinheit (1) eine normale Linie aufweist, die sich zur Definition eines Kreuzungspunktes kreuzen, und der Kreuzungswinkel (θ) an der Kreuzungsstelle zwischen den beiden normalen Linien des Strahlungsmoduls (2) und der optischen Linseneinheit (1) definiert ist,
dass der hydrophile optische Film (11) auf einer Außenfläche der Linse der optischen Linseneinheit (1) angeordnet ist;
und dass eine gerade Linie, die durch den Mittelpunkt des Strahlungsmoduls (2) verläuft, parallel zu einer anderen geraden Linie ist, die durch den Mittelpunkt der optischen Linseneinheit (1) verläuft, und die geraden Linien um einen Abstand (D) von mindestens 0,1 mm voneinander beabstandet sind.

2. Bilderfassungssystem nach Anspruch 1, ferner umfassend einen Basissitz (3) mit einer Endfläche, die zur Bildung einer Aussparung (31) eingedrückt ist, in der die optische Linseneinheit (1) und das Strahlungsmodul (2) sitzen.

3. Bilderfassungssystem nach Anspruch 1, wobei zwei strahlende Module (2) an Positionen sitzen, die die Umgebung der optischen Linseneinheit (1) umgeben.

4. Bilderfassungssystem nach Anspruch 3, wobei jedes der strahlenden Module (2) eine LED (Light Emitting Diode) ist, die geeignet ist, ultraviolette Lichtstrahlen zu emittieren.

5. Bilderfassungssystem nach Anspruch 1, worin der maximale Schnittwinkel 75 Grad beträgt.

6. Bilderfassungssystem nach Anspruch 1, worin das Strahlungsmodul manuell oder automatisch oder eine Kombination aus beidem aktiviert oder deaktiviert wird.

7. Bilderfassungssystem nach Anspruch 6, ferner umfassend eine Regentropfen-Erfassungseinheit (5), die das Strahlungsmodul (2) automatisch bei Erkennung von Regentropfen aktiviert.

8. Bilderfassungssystem nach Anspruch 6, ferner umfassend eine Steuervorrichtung (6), die eine manuelle Aktivierung oder Deaktivierung des Strahlungsmoduls (2) ermöglicht.

## Revendications

1. Un système de capture d'image comprenant :
une unité de lentille optique (1) avec une lentille ;
au moins un module rayonnant (2) : et
une unité de détection de luminosité (4),
dans lequel le système de capture d'image comprend un film optique hydrophile (11), dans lequel le module rayonnant (2) est utilisé pour rayonner un faisceau lumineux, dans lequel le module rayonnant (2) est disposé à une position appropriée entourant un environnement de l'unité optique à lentilles (1) et coopérant avec l'unité optique à lentilles pour définir un angle d'intersection (θ), le faisceau lumineux provenant du module rayonnant (2) est rayonné sur le film optique hydrophile (11) afin de prolonger l'effet du film optique hydrophile (11) tandis que l'unité de détection de luminosité (4) lors de la détection d'une luminosité externe active le module rayonnant (2), le faisceau lumineux émis par le module rayonnant (2) ayant une longueur d'onde allant de 360-400 nanomètres,
**caractérisé en ce que** chacun des au moins un module rayonnant (2) et l'unité de lentille optique (1) a une ligne normale se croisant pour définir un point de croisement et l'angle d'intersection (θ) est défini au point de croisement entre les deux lignes normales du module rayonnant (2) et l'unité de lentille optique (1),
**en ce que** le film optique hydrophile (11) est disposé sur une surface extérieure de la lentille de l'unité de lentille optique (1) ;
et **en ce qu'**une ligne droite passant par le point central du module rayonnant (2) est parallèle à une autre ligne droite passant par le point central de l'unité de lentille optique (1) et les lignes droites sont espacées d'une distance (D) d'au moins 0,1 mm.

2. Système de capture d'image selon la revendication 1, comprenant en outre un siège de base (3) ayant une face d'extrémité en retrait pour former un évidement (31), dans lequel l'unité de lentille optique (1) et le module rayonnant (2) sont placés.

3. Système de capture d'image selon la revendication 1, dans lequel deux modules rayonnants (2) sont placés à des positions entourant l'environnement de l'unité de lentille optique (1).

4. Système de capture d'image selon la revendication 3, dans lequel chacun des modules rayonnants (2) est une DEL (diode électroluminescente) adaptée pour émettre des faisceaux lumineux ultraviolets.

5. Système de capture d'image selon la revendication 1, dans lequel l'angle d'intersection maximal est de 75 degrés.

6. Système de capture d'image selon la revendication 1, dans lequel le module rayonnant est activé ou désactivé manuellement ou automatiquement, ou une combinaison des deux.

7. Système de capture d'image selon la revendication 6, comprenant en outre une unité de détection de gouttes de pluie (5), qui active automatiquement le module rayonnant (2) lors de la détection de gouttes de pluie.

8. Système de capture d'image selon la revendication 6, comprenant en outre un dispositif de commande (6) qui permet l'activation ou la désactivation manuelle du module rayonnant (2).
